# EUROPEAN PATENT APPLICATION

(11) **EP 1 674 943 A2**
(43) Date of publication of application: **28.06.2006**
(21) Application number: 05027866.2
(22) Date of filing: 20.12.2005
(51) Int. Cl.: G03G 15/08, G03G 15/00

(54) **Image forming system for calculating a toner consumption**

(30) Priority: 27.12.2004 JP 2004376952
(71) Applicant: SEIKO EPSON CORPORATION, Shinjuku-ku, Tokyo 163-0811 (JP)
(72) Inventor: Sugita, Takatoshi Seiko Epson Corp., Suwa-shi Nagano-ken 392-8502 (JP)
(74) Representative: HOFFMANN EITLE

(57) **Abstract**

RGB graphic data generated using application software (201) in a host computer (200) is subjected to color conversion by means of a printer driver (210) so as to be converted into data indicative of CMYK color images. The resultant data is further subjected to a compression process for generating image data Dim. Dot count data Ddc is generated based on information items generated in the course of the compression process and indicating respective tone values of individual toner dots and the number of appearance dots. These data items are transmitted to a printer (100). The printer (100) decompresses the received image data Dim to reconstruct bit-mapped data and forms an image corresponding to the bit-mapped data. A toner counter 154 calculates a toner consumption based on the received dot count data Ddc.

## Description

### BACKGROUND OF THE INVENTION

### 1.Field of the Invention

The present invention relates to a technique of calculating toner consumption in an image forming system.

### 2.Description of the Related Art

In an image forming system including an apparatus for generating image data and an apparatus for forming images based on the image data, such as exemplified by a combination of a host computer and a printer connected thereto, it is a general practice to execute the following data processing. The contents of an image to be formed are decided using character/image editing application software, while image information corresponding to the contents of the image is generated. The resultant image information is expanded to generate image data pieces corresponding to respective colors of toners contained in the image forming apparatus. The image data pieces are further subjected to signal processing including gamma correction, half toning and the like before the data pieces are inputted to an engine of the image forming apparatus.

The systems of this type include one in which the host computer performs complicated data processing so as to simplify processing to be done by the image forming apparatus. In this manner, the image forming apparatus is reduced in costs. A printer disclosed in Japanese Unexamined Patent Publication No.2000-168174, for example, is generally known as a host-based printer, which receives bit-mapped image data from a host apparatus and forms an image corresponding to the image data. The printer is also adapted to count the number of dots composing the formed image by means of a post-processor circuit and to calculate toner consumption based on the count value.

It may not be a very difficult task for the image forming apparatus (generally known as an intelligent printer) equipped with a processor having a high signal processing ability to calculate the toner consumption based on the received image data. In the aforementioned host-based image forming apparatus, however, the processing of detecting to-be-formed dots from the received image data and counting the number of such dots pose a heavy load on the processor. Furthermore, it is necessary for providing special hardware as practiced in the above priorart apparatus. In the image forming system including the image forming apparatuses of the host-based configuration, therefore, it is desirable to establish a technique of permitting the apparatus of a simple configuration to determine the toner consumption with high accuracy.

### SUMMARY OF THE INVENTION

In view of the foregoing, the invention has been accomplished and has an object to provide a technique of efficiently calculating the toner consumption, the technique used in the host-based image forming systems and the image forming apparatuses constituting the systems.

In order to achieve the above object, an image forming system of the invention comprises: an image data generator which generates image data related to an image to be formed and outputs the image data; and an image forming apparatus which forms an image corresponding to the image data by using an internal toner, and is characterized in that the image data generator outputs to the image forming apparatus the image data containing image information indicative of the contents of an image to be formed in correspondence to a color of the internal toner contained in the image forming apparatus and dot count data related to toner dots composing the image, whereas the image forming apparatus receives the image data and the dot count data and calculates a quantity of toner consumed in forming the image based on the dot count data.

According to the invention of such a constitution, the process for generating the dot count data necessary for calculating the toner consumption is carried out by the image data generator, so that a processing load on the image forming apparatus may be reduced. The calculation of the toner consumption based on the dot count data thus generated requires a proper grasp of the characteristics of the image forming apparatus. According to the invention, the calculation process is actually performed by the image forming apparatus and hence, the toner consumption may be efficiently determined. Furthermore, the invention is adapted to increase the calculation accuracy. In order to calculate the toner consumption with high accuracies, it is desirable to adopt a calculation method incorporating information indicative of characteristics intrinsic to the image forming apparatus and the usage status thereof. If the toner consumption is calculated by the image forming apparatus, the image forming apparatus may easily utilize these information items for performing the calculation.

Specifically, the invention is arranged as follows. Of the image data generator and the image forming apparatus which constitute the image forming system, the image data generator, which grasps the contents of the image so as to be able to more easily acquire the information on toner dots to be formed, generates the dot count data. On the other hand, the image forming apparatus, which can acquire the apparatus-specific information more easily, performs the final calculation of toner consumption based on the dot count data. Such an arrangement provides an efficient calculation of the toner consumption and besides, increases the calculation accuracy.

In order to achieve the above object, an image forming apparatus of the invention comprises: an input portion receives, from an external apparatus, image data containing image information corresponding to a color of an internal toner and dot count data related to toner dots composing an image corresponding to the image information; an image forming unit forms the image corresponding to the image data by using the internal toner; and a toner consumption calculator calculates a quantity of toner consumed in forming the image based on the dot count data.

In order to achieve the above object, an inventive control program installed an image data generator for generating image data related to an image to be formed and transmitting the resultant image data to an image forming apparatus, the program directing the image data generator to perform: a first step of generating the image data containing image information indicating the contents of an image to be formed in correspondence to a color of an internal toner contained in the image forming apparatus; a second step of generating dot count data related to toner dots composing the image; and a third step of transmitting the image data and the dot count data to the image forming apparatus.

According to the invention and a computer-readable recording medium recording the above control program, the toner consumption may be efficiently determined just as in the aforementioned image forming system.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

Fig.1 is a block diagram which shows an arrangement of an image forming system according to one embodiment of the invention;
Fig.2 is a schematic diagram which shows an image forming apparatus of the embodiment;
Fig.3 is a block diagram which shows an electrical arrangement of the image forming apparatus of Fig.2;
Fig.4 is a diagram which shows the principle of the run length coding method;
Fig.5 is a diagram which shows a configuration of the toner counter; and
Fig.6 is a chart which shows timings of transferring data from the host computer to the printer.

### DETAILED DESCRIPTION OF THE PREFERRED EMBODIMENTS

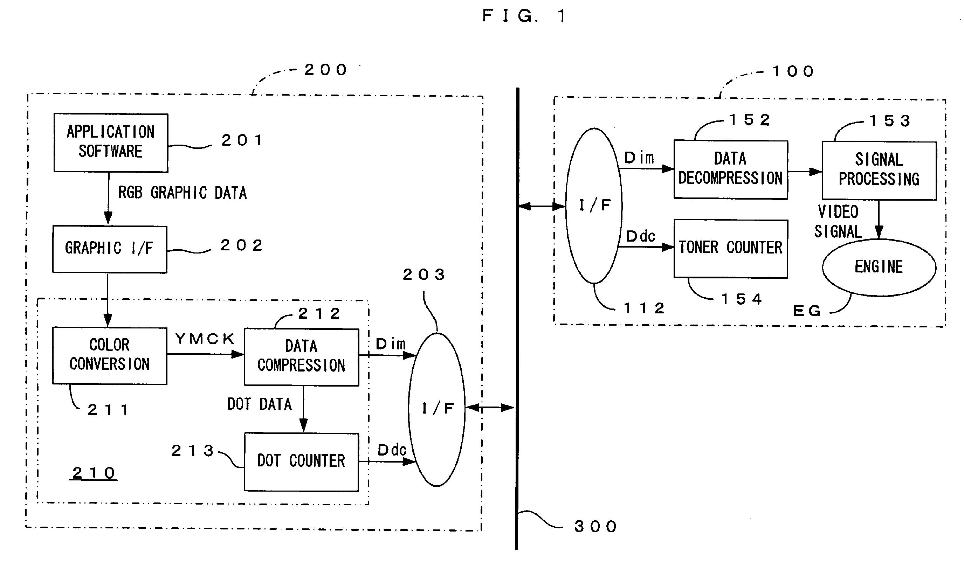

Fig.1 is a block diagram which shows an arrangement of an image forming system according to one embodiment of the invention. In Fig.1, function blocks implemented in software pieces are enclosed in rectangular frames whereas function blocks implemented in hardware pieces are enclosed in elliptical frames. In this image forming system, a host computer 200 equivalent to an "image data generator" of the invention and a printer 100 equivalent to an "image forming apparatus" of the invention are interconnected via a local area network (LAN) line 300. When image data generated in the host computer 200 is supplied to the printer 100 via the LAN line 300, the printer 100 forms an image corresponding to the image data.

Application software 201 including a word processing software piece, a drawing software piece and the like is installed in the host computer 200. These software pieces are used to generate RGB graphic data related to the image to be formed. As required, the resultant graphic data is transmitted to a printer driver software piece 210 (hereinafter, simply referred to as "printer driver") via a graphic interface(I/F) 202.

The printer driver 210 is provided with various function blocks such as a color conversion block 211, a data compression block 212 and a dot counter 213. In the color conversion block 211, the RGB graphic data input is converted into reconstruct respective bit-mapped data pieces related to Y(yellow), M(magenta), C(cyan) and K(black) colors representing the colors of toners contained in the printer 100. The resultant bit-mapped data has an enormous volume. Assumed that the printer has a resolution of 600DPI(dots per inch), for example, an image to be printed on an A-4 size(297mm × 210mm) sheet according to JIS (Japanese Industrial Standards) is roughly composed of 7000 × 5000 dots. In a case where each dot is represented by an 8-bit tone value, the data piece per color has a volume of about 35 megabytes so that a total volume of the data pieces on the four colors is about 140 megabytes.

Hence, the data compression block 212 performs a predetermined data compression for reducing the respective volumes of the bit-mapped data pieces related to the Y, M, C, K colors. In the meantime, dot data containing information pieces indicative of the number of dots to be formed and the density of each dot is generated in the course of the data compression process. The dot counter 213 detects the dot count data for counting the number of dots to be formed. The contents of the data compression process and the operations of the dot counter 213 will be described in details hereinlater.

Image data Dim generated by the compression process and dot count data Ddc generated by the dot counter 213 are outputted to the LAN line 300 via an interface(I/F) 203.

In the printer 100 receiving the above data via an interface(I/F) 112, a data decompression block 152 performs a data decompression process on the compressed image data Dim so as to reconstruct the original bit-mapped data pieces related to the respective toner colors. The resultant bit-mapped data pieces are committed to a signal processing block 153 where the data pieces are subjected to predetermined signal processing including gamma correction, half toning and the like. The data so processed is inputted to an engine EG, which in turn, performs an image forming operation based on the data so supplied, thereby forming images. In the printer 100, in addition, a toner counter 154 calculates toner consumption based on the dot data Ddc inputted via the interface 112. The operations of the toner counter 154 will be described in details hereinlater.

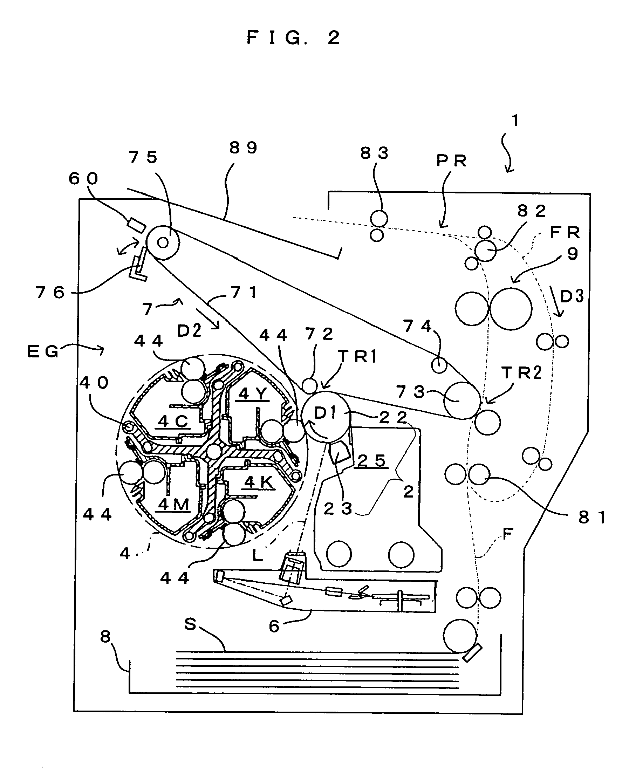

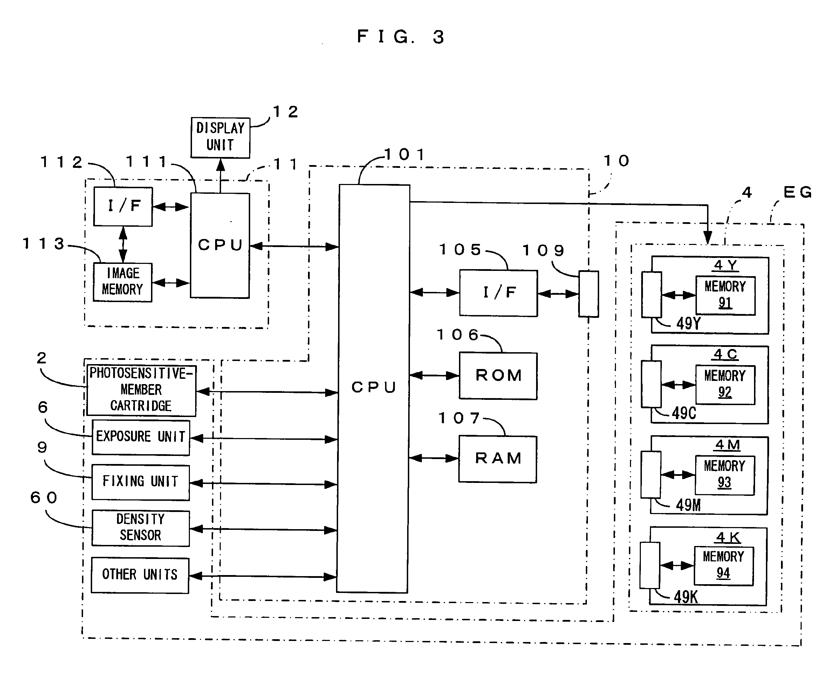

Fig.2 is a schematic diagram which shows an image forming apparatus of the embodiment. Fig.3 is a block diagram which shows an electrical arrangement of the image forming apparatus of Fig.2. This image forming apparatus is equivalent to the printer 100 constituting the aforesaid image forming system. The apparatus is adapted to form a full-color image by superimposing four colored toners (developers) of yellow(Y), cyan(C), magenta(M) and black(K) (color print mode) or to form a monochromatic image using the black toner alone (monochromatic print mode). The image forming apparatus operates as follows. When a main controller 11 is supplied with an image signal from an external apparatus such as a host computer, the main controller 11 outputs a command, based on which an engine controller 10 controls individual parts of the engine EG for carrying out predetermined image forming operations. Thus, an image corresponding to the image signal is formed on a sheet S.

In the engine EG, a photosensitive member 22 is disposed so that the photosensitive member 22 can freely rotate in the arrow direction D1 shown in Fig.2. Around the photosensitive member 22, a charger unit 23, a rotary developer unit 4 and a cleaner 25 are disposed in the rotation direction D1. A predetermined charging bias is applied upon the charger unit 23, whereby an outer circumferential surface of the photosensitive member 22 is charged uniformly to a predetermined surface potential. The cleaner 25 removes toner which remains adhering to the surface of the photosensitive member 22 after primary transfer, and collects the toner into a used toner tank which is disposed inside the cleaner 25. The photosensitive member 22, the charger unit 23 and the cleaner 25, integrated as one, form a photosensitive member cartridge 2. The photosensitive member cartridge 2 can be freely attached to and detached from a main section of the apparatus 1 as one integrated unit.

An exposure unit 6 emits a light beam L toward the outer circumferential surface of the photosensitive member 22 which is thus charged by the charger unit 23. The exposure unit 6 makes the light beam L expose on the photosensitive member 22 in accordance with an image signal fed from the external apparatus and forms an electrostatic latent image which corresponds to the image signal.

The developer unit 4 develops thus formed electrostatic latent image with toner. The developer unit 4 comprises a support frame 40 which is disposed for free rotations about a rotation shaft which is perpendicular to the plane of Fig.2, and also comprises a yellow developer 4Y, a cyan developer 4C, a magenta developer 4M and a black developer 4K which house toner of the respective colors and are formed as cartridges which are freely attachable to and detachable from the support frame 40. The engine controller 10 controls the developer unit 4. The developer unit 4 is driven into rotations based on a control instruction from the engine controller 10. When the developers 4Y, 4C, 4M and 4K are selectively positioned at a predetermined developing position which abuts on the photosensitive member 22 or is away a predetermined gap from the photosensitive member 22, toner of the color corresponding to the selected developer is supplied onto the surface of the photosensitive member 22 from a developer roller 44 disposed to the selected developer which carries toner of this color and has been applied with the predetermined developing bias. As a result, the electrostatic latent image on the photosensitive member 22 is visualized in the selected toner color.

Non-volatile memories 91 through 94 which store information regarding the respective developers are disposed to the developers 4Y, 4C, 4M and 4K. As one of connectors 49Y, 49C, 49M and 49K disposed to the respective developers selected as needed is connected with a connector 109 which is disposed to the main section, a CPU 101 of the engine controller 10 and one of the memories 91 through 94 communicate with each other. In this manner, the information regarding the respective developers is transmitted to the CPU 101 and the information inside the respective memories 91 through 94 is updated and stored.

A toner image developed by the developer unit 4 in the manner above is primarily transferred onto an intermediate transfer belt 71 of a transfer unit 7 in a primary transfer region TR1. The transfer unit 7 comprises the intermediate transfer belt 71 which runs across a plurality of rollers 72 through 75, and a driver (not shown) which drives a roller 73 into rotations to thereby rotate the intermediate transfer belt 71 along a predetermined rotation direction D2. For transfer of a color image on the sheet S, toner images in the respective colors on the photosensitive member 22 are superposed one atop the other on the intermediate transfer belt 71, thereby forming a color image. Further, on the sheet S unloaded from a cassette 8 one at a time and transported to a secondary transfer region TR2 along a transportation path F, the color image is secondarily transferred.

At this stage, for the purpose of correctly transferring the image held by the intermediate transfer belt 71 onto the sheet S at a predetermined position, the timing of feeding the sheet S into the secondary transfer region TR2 is managed. To be more specific, there is a gate roller 81 disposed in front of the secondary transfer region TR2 on the transportation path F. As the gate roller 81 rotates in synchronization to the timing of rotations of the intermediate transfer belt 71, the sheet S is fed into the secondary transfer region TR2 at predetermined timing.

Further, the sheet S now bearing the color image is transported to a discharge tray 89, which is disposed to a top surface of the main section of the apparatus, through a fixing unit 9, a pre-discharge roller 82 and a discharge roller 83. Meanwhile, when images are to be formed on the both surfaces of the sheet S, the discharge roller 83 starts rotating in the reverse direction upon arrival of the rear end of the sheet S, which carries the image on its one surface as described above, at a reversing position PR located behind the pre-discharge roller 82, thereby transporting the sheet S in the arrow direction D3 along a reverse transportation path FR. While the sheet S is returned back to the transportation path F again before arriving at the gate roller 81, the surface of the sheet S which abuts on the intermediate transfer belt 71 in the secondary transfer region TR2 and is to receive a transferred image is at this stage opposite to the surface which already bears the image. In this fashion, it is possible to form images on the both surfaces of the sheet S.

Further, there are a density sensor 60 and a cleaner 76 in the vicinity of the roller 75. The density sensor 60 optically detects a toner amount which constitutes a toner image which is formed as a patch image on the intermediate transfer belt 71 when needed. The density sensor 60 irradiates light toward the patch image, receives reflection light from the patch image, and outputs a signal corresponding to a reflection light amount. The cleaner 76 can be attached to and detached from the intermediate transfer belt 71. When abutting on the intermediate transfer belt 71 as needed, the cleaner 76 scrapes off the toner remaining on the intermediate transfer belt 71 and the toner which constitutes the patch image.

Further, as shown in Fig.3, the apparatus 1 comprises a display 12 which is controlled by a CPU 111 of the main controller 11. The display 12 is formed by a liquid crystal display for instance, and shows predetermined messages which are indicative of operation guidance for a user, a progress in the image forming operation, abnormality in the apparatus, the timing of exchanging any one of the units, etc.

In Fig.3, denoted at 113 is an image memory which is disposed to the main controller 11, so as to store an image which is fed from an external apparatus such as a host computer via an interface 112. Denoted at 106 is a ROM which stores a calculation program executed by the CPU 101, control data for control of the engine part EG, etc. Denoted at 107 is a memory (RAM) which temporarily stores a calculation result derived by the CPU 101, other data, etc.

Of the function blocks of the printer 100 shown in Fig.1, the data decompression block 152 may be implemented by the CPU 111 disposed in the main controller 11 executing a previously installed program, whereas the signal processing block 153 and the toner counter 154 may be implemented by the CPU 101 disposed in the engine controller 10 executing respective programs previously installed.

Next, description is made on the data compression process performed in the image forming system. A variety of techniques have been known as the data compression method for reducing the volume of data transmitted or received via the LAN line 300. Some of these techniques may be applied to this system, as well. As one example of the data compression methods applicable to the system, a run length coding method is described herein. The run length coding method is generally used as a data compression technique for image data.

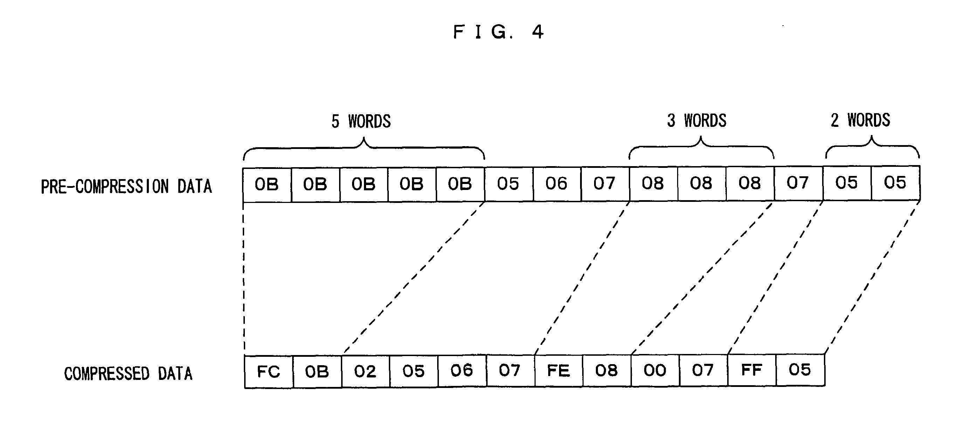

Fig.4 is a diagram which shows the principle of the run length coding method. Let us consider a case, for example, where precompression data (1 word: 8 bits) has a code string shown the upper row in Fig.4. In this example, five consecutive data words 0Bh precede (the symbol "h" indicating that the data value is expressed in hexadecimal representation). Hence, the data segment of five words is represented by a total number of two words, one of which indicates the number of consecutive data words, and the other of which indicates a numerical value of the consecutive data words. Specifically, as illustrated by a code string of the lower row in Fig.4, the data segment of five words is represented by two words, which include FCh indicating a value of 4 left by subtracting 1 from 5, the number of consecutive data words, using a complement representation (2's complement), and 0Bh indicating the numerical value of the consecutive data words.

This data segment is followed by a data segment of three words (05h, 06h, 07h) individually representing different values. Hence, a numerical value indicative of a length of the data segment containing mutually different values is prefixed to the data segment. Since the data segment has a length of three words, 02h indicating a value of 2 left by subtracting 1 from 3 is prefixed. The data segment is followed by three consecutive words of a value 08h. Hence, this data segment is represented by a word FEh indicating a value of 2 left by subtracting 1 from the number of consecutive data words, using the 2's complement representation, and a word 08h indicating a numerical value of the consecutive data words. The same processing is continued to obtain compressed data which is reduced in volume from that of the precompression data, the compressed data represented by the code string of the lower row in FIG.4.

According to the run length coding method, as described above, the data volume is reduced by representing a data segment containing consecutive data words of the same value by using the combination of words indicating the number of consecutive data words (run length) and indicating the numerical value of the data words. In a text document produced using a word processing software or a graphic image produced using drawing software, dots having the same color and tone value often appear in succession. In other words, when tone values of dots composing the image are arranged in an array, consecutive dots of the same value often appear. That is, common image data contains redundancies. If the run length coding method is applied to such image data, the volume of such data may be reduced. By transmitting the data thus compressed, the volume of data outputted to the LAN line 300 is reduced, so that load on the line may be decreased while time taken to transmit/receive data may also be reduced. In the printer 100 receiving the compressed data, the original bit-mapped data may be reconstructed by performing the decompression process reversing the above compression process.

The bit-mapped data thus reconstructed represent the respective tone values of dots to be formed. Therefore, the engine EG can form a desired image based on the data. Furthermore, the respective tone values of the dots to be formed may be integrated so that a quantity of toner consumed in forming the image may be calculated based on the integration value. One example of the toner consumption calculation techniques of this kind is disclosed in Japanese Unexamined Patent Publication No.2002-162800. According to this toner consumption calculation technique, a quantity of toner consumed in forming a one-page image is determined by integrating values of print dots on a dot-by-dot basis or at each appearance thereof and multiplying a per-page integration value by a predetermined coefficient.

Let us consider the data sequence compressed in the aforementioned manner (the lower code string in FIG.4). The data string represents the tone values of the toner dots to be formed by the printer 100 and the number of toner dots. These values may favorably be used for calculating the toner consumption. The toner consumption calculation technique, in which the respective tone values of the dots are integrated on a dot-by-dot basis and at each appearance thereof, requires the printer to calculate a large volume of data and to perform a high-speed calculation. Such requirements are quite difficult for a host-based printer to fulfill, because it is desired to simplify the calculation process of the printer as much as possible. On the other hand, the tone values and the number of appearance toner dots are determined in the course of the above compression process. If such information items are utilized, the tone values may be more efficiently integrated. More specifically, the integration value of the tone values may be more easily determined by multiplying each tone value by the number of dots of the tone value, and accumulating the multiplication products. Both the compressed image data Dim and the integration value of the tone values used in the toner consumption calculation may be generated simply by retrieving and processing the bit-mapped data piece on each color each time, the bit-mapped data stored in the memories or the like. Therefore, the processor of the host computer 200 may be increased in processing efficiency.

It is desirable that such an integration process is performed in the host computer 200. The first reason is that since the calculation uses the numerical values generated in the course of the data compression process performed in the host computer 200, it is more efficient to perform the calculation by means of the host computer 200. The second reason is that a high-speed processing may be accomplished by performing the data compression process in parallel with the integration of the tone values. The third reason is that the processing performed by the printer may be notably simplified by assigning the integration process to the host computer.

The calculation of toner consumption based on the integration value thus determined may preferably be performed by the printer 100. The reason is as follows. A plurality of host computers and printers can be connected to the LAN line 300, whereas these computer and printers may possibly be used in various combinations. In order to provide a proper management of the residual quantities of toners in the individual printers, therefore, it is necessary for the printers themselves to manage the toner consumptions. Even in a case where the computer and printer are interconnected on a one-on-one basis, the printer itself must manage the toner consumption in order to provide for the proper management of the residual quantity of toner when the combination is changed.

For the sake of increasing the accuracy for the calculation of toner consumption, as well, it is desirable for the printer 100 to calculate the toner consumption. The reason is as follows. The toner consumption may vary from one apparatus to another because of the variations of printer characteristics or environmental differences. In order to reduce the calculation error of toner consumption resulting from such variations, the calculation must be performed taking information related to the usage status of the printer into consideration. The information related to the usage status of the printer includes the characteristics and ambient environmental conditions of the printer, and the like. These information may be grasped by the printer easily, and therefore, it is desirable that the toner consumption is calculated by the printer.

In the image forming system including the host computer operative to compress image data and to transmit the compressed image data, and the printer operative to decompress the compressed image data and to form an image corresponding to the image data, calculating the toner consumption directly from the compressed image data is much more efficient than calculating the toner consumption based on the bit-mapped data reconstructed by the decompression process. What is more, the calculation process per se is also simplified.

The most preferred mode of calculation of toner consumption that is performed in the system of this type is as follows. Out of the calculation steps for determining the toner consumption, the integration of the tone values of the individual dots represented by the image data is performed by the host computer in parallel with the compression of the image data, whereas the calculation for determining the actual toner consumption from the integration value is performed by the printer.

In the image forming system of the embodiment, therefore, the host computer 200 compresses the bit-mapped data to generate the image data Dim, while the dot counter 213 generates the dot count data Ddc as receiving the information related to the tone values of individual dots and the number of appearance dots. Specifically, the dot counter 213 multiplies each tone value of consecutive dots by the run length thereof and then, accumulates the multiplication products to generate the dot count data Ddc.

After outputting one-page image data Dim thus compressed, the host computer 200 outputs dot count data Ddc to the printer 100, the dot count data generated by the dot counter 213 integrating values related to the dots of the one-page image.

Receiving these data items, the printer 100 starts the image forming operation for forming a one-page image corresponding to the received image data Dim. In parallel with this operation, the toner counter 154 calculates a quantity of toner consumed in forming the one-page image based on the dot count data Ddc transmitted subsequent to the image data Dim.

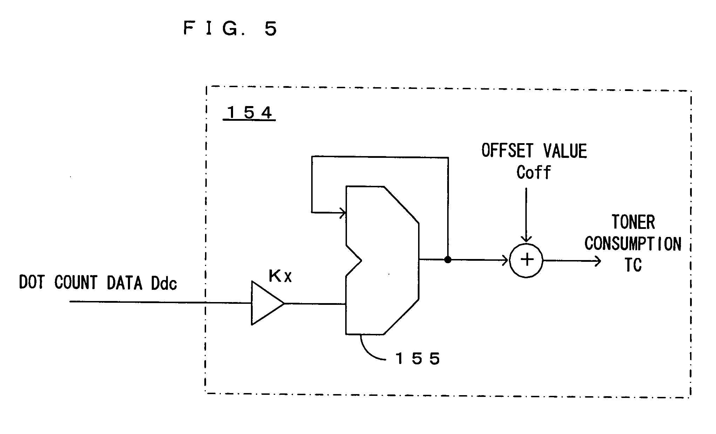

Fig. 5 is a diagram which shows a configuration of the toner counter. The toner counter 154 multiplies the received dot count data Ddc on the one-page image by a predetermined proportional coefficient Kx, thereby determining a toner consumption corresponding to the one-page image. It is noted here that the proportional coefficient Kx represents a value equivalent to a quantity of toner adhered to one toner dot, which value may be empirically determined in advance (or based on a suitable simulation test). While the coefficient may have a constant value, it is more preferred to re-define the value of the coefficient, whenever necessary, according to the usage status of the apparatus such as operation time of the developing device, residual quantity of toner and wear state of the photosensitive member. The re-definition of the coefficient value is for the sake of dealing with the variations of toner consumption which result from the changes of the usage status of the apparatus. According to the embodiment, the products of the dot count data Ddc and the coefficient Kx are accumulated by the accumulator 155. Alternatively, the order of calculation steps may be changed such that the dot count data pieces Ddc are accumulated by the accumulator 155 and then, the integration value is multiplied by the coefficient Kx.

The resultant value, which is equivalent to the toner consumption per page, is accumulated by the accumulator 155. In addition, an offset value Coff equivalent to a quantity of toner consumed in non-direct association with the image formation is added to the above integration value, whereby a toner consumption TC in the overall apparatus is determined. The toner consumed in non-direct association with the image formation includes: a toner liberated from the developing roller 44 to cause fogging as adhered to the photosensitive member 22 or to be scattered in the apparatus; a toner consumed in the apparatus for performing a control operation directed to the maintenance of apparatus performances; and the like. Furthermore, toners consumed in forming various patch images according to the embodiment are also included in such a toner. The quantity of toner consumed in this manner is correlated with the operation time of the apparatus, the number of formed images, the operating conditions of the apparatus and the like. Therefore, a quantity of toner consumed in a period of interest is estimated from these information items which are managed by the engine controller 10 and is used as the offset value Coff. The toner consumption per toner color may be determined by performing the above processings on a per-toner-color basis.

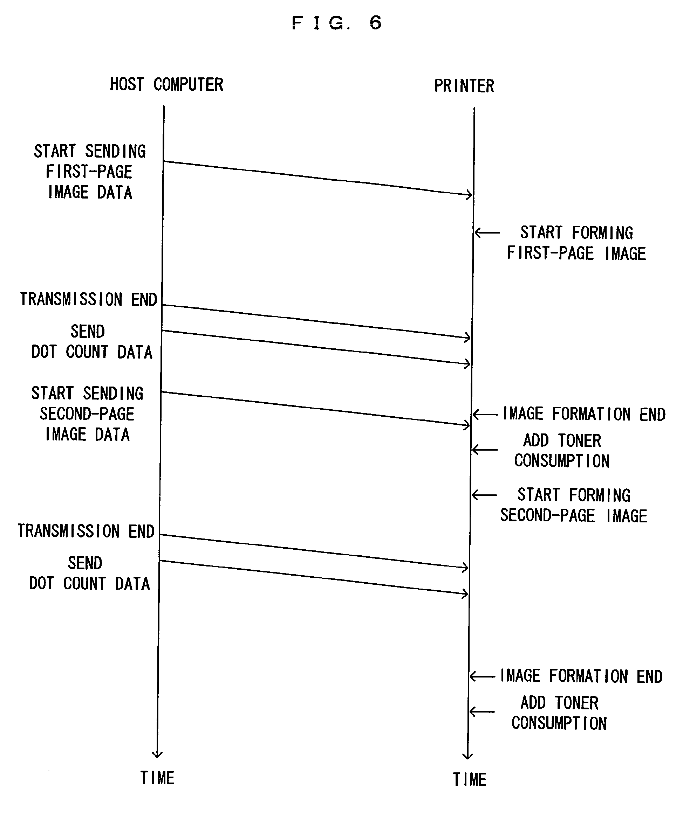

Fig.6 is a chart which shows timings of transferring data from the host computer to the printer. The host computer 200 transmits to the printer 100 an image data piece Dim equivalent to a first-page image to be formed. At receipt of this image data piece, the printer 100 starts to perform the image forming operation. Before the operation of forming the first page image is completed, a dot count data piece Ddc corresponding to the first page is transmitted from the host computer 200. After completion of the formation of the first page image, the toner counter 154 of the printer 100 determines a toner consumption corresponding to the first page image based on the received dot count data piece Ddc. The toner consumption thus determined is stored in the accumulator 155.

In a case where the second and subsequent page images are to be formed, the host computer 200 continues to output image data pieces Dim corresponding to the respective page images one after another. At each output of a one-page image data piece, the host computer outputs a dot count data piece corresponding to the page image of interest. Each time the printer 100 forms a one-page image, the printer determines a toner consumption corresponding to the resultant page image based on the corresponding dot count data piece Ddc and accumulates the toner consumption corresponding to the page image. This method is adopted for the following reason.

Besides the above transmission method, there are other methods for transmitting the dot count data from the host computer 200 to the printer 100. There is another method, for example, wherein dot count data pieces on plural page images included in one job are summed up and the resultant sum is transmitted. This method is advantageous in that the volume of data transmitted from the host computer 200 to the printer 100 is reduced while the processing performed by the printer 100 is simplified. However, this method may potentially pose the following problem. In cases, the printer of this type may encounter an event where the image forming operation is suspended at a time when some of the plural page images, the dot count data pieces on which are summed up, have been formed. Such an event occurs, for example, when power to the apparatus is shut off during the execution of the image forming operation or when the operation is forcefully terminated due to the occurrence of jam. In such cases, the summed dot count data contain data pieces on page images actually formed and those on page images not formed. It is noted here that the toner counter 154 should count a toner quantity corresponding to the actually formed images but should not count in a toner quantity corresponding to the unformed images. On this account, the embodiment discretely determines the dot count data on a per-page basis.

If the image data piece Dim on each page and the dot count data piece Ddc on the corresponding page are transmitted at absolutely different times, the following problem may be encountered when, for example, the data transmission/reception is suspended for some reason. That is, either one of the data pieces is received but the other data piece is not received and hence, it is impossible to accomplish agreement between the toner consumption corresponding to the actually formed images and the calculated toner consumption. On this account, the embodiment is arranged such that at each transmission of a one-page image data piece Dim, a dot count data piece Ddc corresponding to the page image is transmitted. Particularly, the host computer 200 is adapted to transmit the dot count data piece Ddc at such a time as to permit the printer 100 to receive the dot count data piece before the formation of the corresponding page image is completed. This is effective to minimize the disagreement between the actual toner consumption and the calculated toner consumption, which may possibly occur when the image forming operation is suspended.

The toner consumption thus determined on per-toner-color basis is stored in the RAM 107 so as to be utilized in the management of the developing devices. Information indicative of the residual toner quantity is retrieved from each of the memories 91 through 94 disposed in the respective developing devices 4Y, 4C, 4M and 4K. The toner consumption so determined is subtracted from the retrieved value and the remainder is re-stored in each of the memories 91 through 94, whereby each of the memories 91 through 94 of the developing devices 4Y through 4K may store the residual toner quantity of the corresponding developing device at all times. Thus is provided a proper management of the service life of each of the developing devices.

According to the image forming system of the embodiment, as described above, the host computer 200 integrates the respective tone values of the toner dots composing the image to be formed and outputs the resultant integration value as the dot count data to the printer 100, whereas the printer 100 calculates the toner consumption based on the dot count data thus received. Thus, the processing load on the printer 100 is reduced by assigning the host computer 200 to perform the integration of the tone values, which requires a high processing ability. That is, the toner consumption calculation technique of the embodiment may preferably be applied to the host-based image forming system wherein the simplest possible configuration of the printer is desired.

Since the image data compressed by the host computer 200 is transmitted to the printer 100, the data transmission/reception may be accomplished in a short time so that the load on the LAN line 300 is also reduced. Furthermore, the information pieces on the tone value per toner dot and on the number of appearance dots, which are generated in the course of the compression process, are used for generating the dot count data in parallel with the compression process. Therefore, the host computer 200 and the image forming system as a whole may be increased in the processing efficiency.

Since the final calculation of toner consumption is performed by the printer 100, the optimum management of toner consumption in each printer may be accomplished not only in the system wherein the host computer and the printer are connected on a one-on-one basis, but also in an image forming system wherein either the host computer or the printer is connected with a plural number of printers or host computers or wherein plural host computers are connected with plural printers. Furthermore, the embodiment is adapted to deal with the variations of toner consumption resulting from the performance variations of printers or the changes in the operating environment. Therefore, the calculation of toner consumption may be increased in accuracy.

According to the embodiment as described above, the host computer 200 and the printer 100 function as an "image data generator" and an "image forming apparatus" of the invention, respectively. The interface 112 and data decompression block 152, the engine EG, and the toner counter 154, which are disposed in the printer 100, function as an "input portion", an "image forming unit" and a "toner consumption calculator" of the invention, respectively. The printer driver 210 comprising the software installed in the host computer 200 is equivalent to a "control program" of the invention.

It is to be noted that the invention is not limited to the foregoing embodiment and various changes and modifications other than the above may be made thereto so long as such changes and modifications do not deviate from the scope of the invention. In the image forming system of the foregoing embodiment, for example, the host computer 200 and the printer 100 are interconnected on a one-on-one basis via the LAN line 300. As described above, however, the invention is not limited to this connection mode and is also applicable to systems wherein one or plural computers and one or plural printers are interconnected via the LAN line. In this case, one computer constituting the system may be adapted to output the data items to one printer, an image output from which is desired, the output data items including image data corresponding to the image to be formed and dot count data corresponding to the image. Each printer may sequentially process these data pieces discretely applied from each corresponding computer, so as to form required images. In addition, each printer may sum up toner consumptions determined from the dot count data pieces corresponding to the formed images, thereby determining a total quantity of toner consumed by the printer. In this case, each computer need be provided with printer drivers in one-on-one relation with the printers, such that each computer can selectively enable any one of the plural printers.

Furthermore, the invention is also applicable to a system wherein the host computer and the printer are directly interconnected on a one-on-one basis without using a general-purpose communications line such as LAN line. In such a system, it is also possible for the host computer to manage the quantity of toner consumed in the printer. However, the following problem may occur in a case where, for example, the interconnection is changed in midstream so that the host computer is combined with another printer. That is, the data related to the toner consumption in the alternative printer, which data was managed by an initial computer, is not passed to the computer, which may be unable to manage the alternative printer properly. Even in such one-on-one system, the application of the invention makes it possible to provide the optimum management of the residual quantity of toner in the printer, the invention wherein the computer having a high calculating ability integrates the respective tone values of the individual toner dots whereas the printer calculates the toner consumption based on the integration value.

The image forming system of the foregoing embodiment has the arrangement wherein the respective tone values of the individual toner dots expressed in multiple tones are integrated and then, the toner consumption is calculated based on the integration value. Besides this, there is known another system wherein the individual toner dots are expressed in ON-OFF binary values. In such a system, the host computer may count the number of ON-dots instead of integrating the respective tone values of the toner dots. The toner consumption may be determined based on the count value.

In the foregoing embodiment, the dot count data is generated by the host computer utilizing the data generated in the process of compressing the bit-mapped data. However, the method of generating the dot count data is not limited to this. For instance, the host computer may also be adapted to generate the dot count data directly from the bit-mapped data, independently from the compression process. In this case, the host computer is somewhat decreased in the processing efficiency, but the processing load on the printer is reduced so that the configuration of the printer may be simplified.

Alternatively, the dot count data may also be generated from data generated in the course of a color conversion process performed by the color conversion block 211, for example. In the color conversion process performed by the printer driver, the original data expressed in the three primary colors of RGB is expanded to generate data pieces representative of individual colors of toners contained in the printer. In this process, the number of appearance toner dots to be formed on a per-toner-color basis and the tone values thereof are determined. Hence, the dot count data may also be generated from such information pieces and the same effect may be obtained. Particularly, an arrangement may be made such that the generation of the dot count data is carried out in parallel with the color conversion process, so as to increase the processing efficiency.

Further, the image forming apparatuses of this type are reported to vary in per-dot toner adhesion depending upon the run lengths of toner dots, as stated in Japanese Unexamined Patent Publication No.2002-174929, for example. Hence, it is possible to increase the calculation accuracy even further by utilizing the information items indicating the tone values of toner dots and the run lengths thereof, the information items contained in the image data generated by the aforesaid compression process. Specifically, the host computer 200 of the foregoing embodiment simply integrates the tone values of toner dots without classifying the toner dots of the same tone value based on the run length. Alternatively, the host computer 200 may classify the toner dots of the same tone value into groups by the run length, discretely count the number of dots in respective groups, and output the individual count values as the dot count data. The printer 100, in turn, may be previously provided with proportional coefficients varying according to the run lengths. The printer may multiply the number of appearance toner dots in each group so classified by the run length by the proportional coefficient corresponding to the run length and then, sum up the multiplication products. This procedure may deal with the variations of toner adhesion, which result from the various run lengths of the dots. Thus, the toner consumption may be determined with even higher accuracies.

While the foregoing embodiment reduces the data volume by performing a common run length coding process as the compression method of the image information, the invention is also effective in a system adopting any of the other compression methods than the above. The reason is as follows. That is, the execution of the data compression requires at least one access to all the uncompressed, original data pieces stored in the memory or the like. The dot count data is generated by using the accessed data pieces, whereby the need to re-access the data pieces is negated.

The foregoing embodiment is the image forming system including a personal computer as the image data generator. However, the image data generator is not limited to this and the system may also employ a terminal apparatus for work station, an image processor dedicated to the generation of image data, or the like.

In addition, the invention is not limited to the constitution of the foregoing embodiment and may also be applied to an image forming apparatus including only a developing device for a black toner and operating to form monochromatic images; apparatuses including the other transfer media than the intermediate transfer belt (such as a transfer drum and a transfer sheet); the other types of image forming apparatuses such as copiers and facsimile machines; and image forming systems including any of the above apparatuses.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

## Claims

1. An image forming system comprising:
an image data generator which generates image data related to an image to be formed; and
an image forming apparatus which forms the image corresponding to the image data by using an internal toner,
wherein the image data generator outputs to the image forming apparatus the image data containing image information indicative of contents of the image to be formed in correspondence to a color of the internal toner, and dot count data related to toner dots composing the image, and
wherein the image forming apparatus receives the image data and the dot count data and calculates a quantity of toner consumed in forming the image based on the dot count data.

2. An image forming system according to Claim 1, wherein the image data generator generates the image data by compressing the image information and transmits the image data to the image forming apparatus, and
wherein the image forming apparatus decompresses the received image data to reconstruct the image information.

3. An image forming system according to Claim 2, wherein the image data generator counts number of the toner dots based on the image data generated by the compression process or on intermediate data generated in course of the compression process, and provides the count value as the dot count data.

4. An image forming system according to Claim 2, wherein the image data generator determines tone values of the toner dots based on the image data generated by the compression process or on intermediate data generated in course of the compression process, integrates the tone values and provides the integration value as the dot count data.

5. An image forming system according to Claim 1, wherein the image forming apparatus forms a color image by using internal toners of mutually different colors, and
wherein the image data generator performs a color conversion process for expanding contents of the color image to be formed so as to generate image information pieces on the respective toner colors, counts number of the toner dots of each color based on the image information piece generated by the color conversion process or an intermediate data piece generated in course of the color conversion process, and provides the count value as the dot count data.

6. An image forming system according to Claim 1, wherein the image forming apparatus forms a color image by using internal toners of mutually different colors, and
wherein the image data generator performs a color conversion process for expanding contents of the color image to be formed so as to generate image information pieces on the respective toner colors, determines tone values of the toner dots based on the image information piece generated by the color conversion process or an intermediate data piece generated in course of the color conversion process, integrates the tone values of the toner dots on a per-color basis, and provides the integration value as the dot count data.

7. An image forming system according to Claim 1, wherein the image forming apparatus integrates values of the dot count data and calculates the toner consumption based on a product of the integration value and a predetermined coefficient.

8. An image forming system according to Claim 1, wherein the image data generator transmits the dot count data to the image forming apparatus on a page-by-page basis, the dot count data related to one-page image to be formed.

9. An image forming system according to Claim 8, wherein at each formation of one-page image, the image forming apparatus integrates values of the dot count data corresponding to the page image thus formed.

10. An image forming system according to Claim 1, wherein the plural image data generators are connected with the image forming apparatus via an electrical communications line, and
wherein the image forming apparatus discretely receives the image data transmitted from each of the plural image data generators and forms an image corresponding to the received image data.

11. An image forming system according to Claim 10, wherein the image forming apparatus receives the dot count data discretely transmitted from each of the plural image data generators, integrates the values of the received dot count data, and calculates the toner consumption based on the integration value.

12. An image forming apparatus comprising:
an input portion which receives, from an external apparatus, image data containing image information corresponding to a color of an internal toner and dot count data related to toner dots composing an image corresponding to the image information;
an image forming unit which forms a image corresponding to the image data by using the internal toner; and
a toner consumption calculator which calculates a quantity of toner consumed in forming the image,
wherein the toner consumption calculator calculates the toner consumption based on the dot count data.

13. An image forming apparatus according to Claim 12,
wherein the input portion receives the image data generated by compressing the image information, and decompresses the image data to reconstruct the image information.

14. An image forming apparatus according to Claim 12,
wherein the toner consumption calculator integrates values of the dot count data, and calculates the toner consumption based on the integration value and a predetermined coefficient.

15. An image forming apparatus according to Claim 14,
wherein the toner consumption calculator calculates a toner consumption in the whole apparatus by combining the toner consumption determined based on the dot count data and a quantity of toner consumed for the other uses than the image formation based on the image data.

16. A control program for an image data generator which generates image data related to an image to be formed and transmits the resultant image data to an image forming apparatus, the program directing the image data generator to perform:
a first step of generating the image data containing image information indicating contents of the image to be formed in correspondence to a color of an internal toner contained in the image forming apparatus;
a second step of generating dot count data related to toner dots composing the image; and
a third step of transmitting the image data and the dot count data to the image forming apparatus.

17. A control program according to Claim 16, wherein the first step generates the image data by compressing the image information, whereas the second step generates the dot count data based on the image data generated by the compression process or on intermediate data generated in course of the compression process.

18. A recording medium which restores a control program directing an image data generator to perform following steps, the image data generator generating image data related to an image to be formed and transmitting the image data to an image forming apparatus, the steps including:
a first step of generating the image data containing image information indicating contents of the image to be formed in correspondence to a color of an internal toner contained in the image forming apparatus;
a second step of generating dot count data related to toner dots composing the image; and
a third step of transmitting the image data and the dot count data to the image forming apparatus.

19. A method for calculating a quantity of toner consumed in forming a image by an image forming system which includes an image data generator generating image data related to the image to be formed and outputting the image data, and an image forming apparatus receiving the image data and forming the image corresponding to the image data by using an internal toner, the method comprising steps of:
a step performed by the image data generator for generating dot count data related to toner dots composing the image and outputting the dot count data to the image forming apparatus; and
a step performed by the image forming apparatus for receiving the dot count data, integrating the values of the dot count data and calculating the toner consumption based on the integration value.
